# EUROPÄISCHE PATENTSCHRIFT

(11) **EP 3 718 501 B1**
(45) Veröffentlichungstag und Bekanntmachung des Hinweises auf die Patenterteilung: **14.07.2021**
(21) Anmeldenummer: 20165930.7
(22) Anmeldetag: 26.03.2020
(51) Int. Cl.: A61C 9/00, B05C 17/01

(54) **AUSPRESSVORRICHTUNG FÜR DENTALE MATERIALIEN**
DISPENSER FOR DENTAL MATERIALS
DISPOSITIF D'EXTRUSION POUR MATIÈRES DENTAIRES

(30) Priorität: 02.04.2019 DE 102019108533
(43) Veröffentlichungstag der Anmeldung: 07.10.2020
(73) Patentinhaber: Kulzer GmbH, 63450 Hanau (DE)
(72) Erfinder: GRUNDLER, Andreas, 35510 Butzbach (DE); SCHMID, Stephan, 63695 Glauburg (DE); ABEL, Yvonne, 35398 Gießen (DE)
(74) Vertreter: Schultheiss & Sterzel Patentanwälte PartG mbB

(56) Entgegenhaltungen:
- US-A1- 2009 101 673
- US-A1- 2013 270 302

## Beschreibung

Die Erfindung betrifft eine Auspressvorrichtung für hochviskose dentale Materialien, insbesondere Abformmassen, sowie ein Verfahren zum Antreiben zumindest eines Austragskolbens eines Kartuschensystems für ein solches dentales Material.

Moderne dentale Abformmassen werden vorwiegend in Kartuschensystemen, insbesondere in Zweikomponenten-Kartuschen angeboten, die mittels einer Auspressvorrichtung mechanisch oder elektrisch ausgefördert und gemischt werden. Eine solche Auspressvorrichtung ist beispielsweise aus der WO 2017/207188 A1 bekannt. Eine Einkammer-Kartusche für selbsthärtende beziehungsweise feuchtehärtende Materialien, wie sie zum Beispiel im Bau zur Abdichtung eingesetzt werden, ist aus der US 5 909 830 A bekannt. Zu solchen Zwecken sind kommerziell auch pneumatische oder elektrisch angetriebene Auspressvorrichtungen im Markt verfügbar. Diese sind aber nicht ohne weiteres zum Auspressen von dentalen Abformmaterialien geeignet.

Elektrische Ausfördereinrichtungen mischen und dosieren vorwiegend Material aus größeren Kartuschen mit zum Beispiel 350 ml bis 400 ml Gesamtinhalt und werden stationär eingesetzt. Mit diesen füllt man dentale Abformlöffel. Der Mischer kann dabei ebenfalls elektrisch angetrieben werden. Solche Systeme sind beispielsweise aus der US 2009/279382 A1, der US 2015/157429 A1, der DE 20 2006 006 147 U1 und der US2009/101673 A1 bekannt

Dokument US2009/101673 offenbart ein Auspressvorrichtung zum Austreiben eines hochviskosen dentalen Materials aus einem Kartuschensystem, die Auspressvorrichtung aufweisend einen Aktuator, einen Motor, eine Steuerung, eine Bedieneinrichtung und zumindest einen Abstand-Sensor, wobei mit dem Aktuator zumindest ein Austragskolben des Kartuschensystems antreibbar ist, wobei der Aktuator mit dem Motor antreibbar ist, wobei die Bedieneinrichtung manuell bedienbar ist, wobei der zumindest eine Abstand-Sensor mit der Bedieneinrichtung derart verbunden ist, dass zumindest der Betrag der Bewegung der Bedieneinrichtung gemessen wird, und wobei mit der Steuerung der Motor in Abhängigkeit von dem durch den zumindest einen Abstand-Sensor gemessenen Betrag steuerbar wird.

Zur direkten Applikation von dentalen Abformmaterialien im Patientenmund haben sich kleinere Zweikomponenten-Kartuschen mit zwei Kammern und mit einem Inhalt von 5 ml bis 100 ml durchgesetzt. Eine Auspressvorrichtung für Systeme mit solchen geringen Volumina ist beispielsweise aus der US 2018/0250103 A1 bekannt. Es gibt aber auch kleinere, seriell angeordnete Kartuschen mit einem Volumen von kleiner als 5 ml. Das dentale Abformmaterial wird in eine Auspressvorrichtung, auch "Dispensing Gun" genannt, eingelegt und mechanisch über eine Zahnstange, die auf Austragskolben in der Kartusche wirkt, gefördert. Der Mischer ist dabei statisch ausgelegt.

Diese Kartuschen werden für dünnfließende bis hochviskose Materialien eingesetzt (Typen 1 bis 3 gemäß DIN ISO 4823:2015, Veröffentlichungsdatum 2015-08). Wobei die höherviskosen Abformmaterialien (Typ 1) die Anwender durch hohe Auspresskräfte belasten und dadurch die Dosierbarkeit im Mund behindern. Zu hohe Kräfte können zur Ermüdung des Anwenders und zum Zittern der Hand und des Arms führen. Zudem benötigen höherviskose Pasten dickere Mischer, die zu einem erhöhten Materialverlust durch gesteigertes Totvolumen führen.

Typ 0 Materialien lassen sich durch die hohen notwendigen Auspresskräfte nicht mit den üblichen statischen Systemen applizieren.

Neu im Markt sind elektrische Auspressvorrichtungen für kleinere Kartuschen mit einigen wenigen Millilitern Inhalt (<<10 ml). Nachteilig ist an solchen Auspressvorrichtungen, dass diese ausschließlich elektrisch fördern und dem Anwender kein haptisches Feedback über Fördermenge und Druck geben. Dadurch hat der Anwender kein Gefühl dafür, welcher Widerstand dem Vortrieb des Aktuators beziehungsweise dem Auspressvorgang entgegenwirkt.

Die Aufgabe der Erfindung besteht also darin, die Nachteile des Stands der Technik zu überwinden. Insbesondere soll eine Möglichkeit gefunden werden, die Anwendung und die Anwendbarkeit hochviskoser und zäher dentaler Materialien, insbesondere dentale Abformmassen, zu verbessern. Ferner soll eine Auspressvorrichtung bereitgestellt werden, mit der auch zähe und hochviskose Dentalabformassen ausgetragen werden können, wobei der Anwender wie bei niedrigviskosen Dentalabformassen eine Information über den Auspressvorgang bekommen soll. Die Vorrichtung soll möglichst einfach in der Bedienung sein und möglichst keine Umgewöhnung in der Bedienung erfordern. Zudem soll die Auspressvorrichtung wie herkömmliche Auspressvorrichtungen auch bedienbar sein, so dass sich der Anwender bei der Verwendung der Auspressvorrichtung zum Herstellen einer dentalen Abformmasse oder eines anderen dentalen Materials nicht umgewöhnen muss. Der Aufbau soll kostengünstig sein. Zudem soll die Auspressvorrichtung mit herkömmlichen Kartuschen einsetzbar sein. Ferner sollen möglichst auch unterschiedliche Kartuschen und Kartuschensysteme mit der Auspressvorrichtung bedienbar sein. Der Anwender soll die Auspressvorrichtung ohne einen großen Kraftaufwand verwenden können. Die Auspressvorrichtung soll wiederverwendbar sein, so dass nicht für jeden neuen Auspressvorgang eine neue Auspressvorrichtung verwendet werden muss.

Die Aufgaben der Erfindung werden gelöst durch eine Auspressvorrichtung zum Austreiben eines hochviskosen dentalen Materials, insbesondere einer hochviskosen dentalen Abformmasse, aus einem Kartuschensystem, die Auspressvorrichtung aufweisend einen Aktuator, einen Motor, eine Steuerung, eine Bedieneinrichtung und zumindest einen Kraft-Sensor, wobei mit dem Aktuator zumindest ein Austragskolben des Kartuschensystems antreibbar ist, wobei der Aktuator mit dem Motor antreibbar ist oder mit dem Motor ein mechanisch übertragenes Antreiben des Aktuators unterstützbar ist, wobei die Bedieneinrichtung manuell bedienbar ist, wobei der zumindest eine Kraft-Sensor mit der Bedieneinrichtung derart verbunden ist, dass zumindest der Betrag einer auf die Bedieneinrichtung wirkenden Kraft und/oder zumindest der Betrag eines auf die Bedieneinrichtung wirkenden Drehmoments messbar ist, und wobei mit der Steuerung der Motor in Abhängigkeit von dem durch den Kraft-Sensor gemessenen Betrag der auf die Bedieneinrichtung wirkenden Kraft und/oder des auf die Bedieneinrichtung wirkenden Drehmoments steuerbar ist.

Unter einem Aktuator wird erfindungsgemäß ein Teil der Auspressvorrichtung verstanden, mit dem ein linearer Vortrieb des zumindest einen Austragskolbens des Kartuschensystems bewirkt werden kann. Der Aktuator kann vorzugsweise ein linear vortreibbarer Stößel oder eine linear vortreibbare Strange sein. Es sind aber auch andere Aktuatoren vorstellbar, wie beispielsweise eine Gliederkette.

Der Motor kann direkt oder indirekt mit dem Aktuator verbunden sein. Die Steuerung kann zur Steuerung des Motors mit dem Motor verbunden sein. Zudem kann die Steuerung mit dem Kraft-Sensor verbunden sein. Dazu kann die Steuerung auf die von dem Kraft-Sensor erfassten Daten oder Messgrößen zugreifen und diese Daten oder Messgrößen, wenn gewünscht, auswerten. Die Steuerung kann zur Verarbeitung der Daten oder der Messgrößen des Kraft-Sensors ausgebildet sein.

Neben dentalen Abformmassen kommen auch andere dentale Zemente, Kleber oder Füllungen als dentale Materialien in Frage, die mit der erfindungsgemäßen Auspressvorrichtung ausgepresst werden können. Diese werden üblicherweise mit geringeren Volumina ausgepresst und gegebenenfalls appliziert.

Nur die Bedieneinrichtung selbst soll manuell bedienbar sein und nicht die gesamte Auspressvorrichtung, da der Aktuator motorgetrieben oder zumindest motorunterstützt anzutreiben sein soll. Die Bedieneinrichtung kann also manuell bedient werden.

Bei erfindungsgemäßen Auspressvorrichtungen kann vorgesehen sein, dass die Auspressvorrichtung eine Kartuschenpistole ist.

Hierdurch wird sichergestellt, dass die Auspressvorrichtung wie herkömmliche und bekannte Auspressvorrichtungen verwendet werden kann. Der Anwender muss sich dann nicht umgewöhnen, wenn er eine erfindungsgemäße Auspressvorrichtung anwenden möchte.

Des Weiteren kann vorgesehen sein, dass die Bedieneinrichtung ein Abzug, ein Hebel oder ein Druckknopf ist, wobei vorzugsweise die Auspressvorrichtung über den Abzug, den Hebel oder den Druckknopf mit der gleichen Hand bedienbar ist, mit der die Auspressvorrichtung einhändig zu halten ist.

Hierdurch kann die Kraft und/oder das Drehmoment, die beziehungsweise das auf den Abzug oder den Druckknopf als Bedieneinrichtung wirkt, sehr genau manuell eingestellt und gemessen werden. Zudem kann die Auspressvorrichtung so einhändig bedient und angewendet werden.

Es kann auch vorgesehen sein, dass die Auspressvorrichtung einen Energiespeicher aufweist, wobei die Energie zum Antreiben des Motors aus dem Energiespeicher entnehmbar ist, wobei vorzugsweise der Energiespeicher ein Batteriespeicher, ein Akkumulator oder ein Druckgasreservoir ist.

Hierdurch ist die Auspressvorrichtung autark und muss nicht an eine externe Energieversorgung angeschlossen werden. Der Energiespeicher kann eine geringe Kapazität aufweisen, weil ein einzelner Auspressvorgang nicht sehr viel Energie in Anspruch nimmt. Gegebenenfalls kann der Energiespeicher zwischen den Anwendungen immer neu aufgeladen werden.

Ferner kann vorgesehen sein, dass der zumindest eine Kraft-Sensor zum Messen des Betrags wenigstens einer linearen Kraft und/oder wenigstens eines Drehmoments geeignet oder vorgesehen ist.

Hierdurch ist der Kraft-Sensor für die vorgesehene Anwendung optimiert. Bei dieser Anwendung reicht es nämlich aus, lediglich den Betrag der Kraft und/oder des Drehmoments zu messen, um damit die Leistung des Motors und damit die von dem Motor auf den Aktuator bewirkte Kraft zu steuern. Die Auspressvorrichtung kann so einfacher und kostengünstiger aufgebaut werden, als wenn auch die Richtung der Kraft beziehungsweise des Drehmoments bestimmt wird.

Gemäß einer bevorzugten Weiterbildung der vorliegenden Erfindung kann vorgesehen sein, dass die Steuerung den Motor derart steuert, dass die von dem Motor auf den Aktuator wirkende Kraft oder das von dem Motor auf den Aktuator wirkende Drehmoment in einem Kraft-Bereich oder Drehmoment-Bereich proportional zu der durch den Kraft-Sensor gemessenen Betrag der auf die Bedieneinrichtung wirkenden Kraft ist oder des auf die Bedieneinrichtung wirkenden Drehmoments ist.

Dass die von dem Motor auf den Aktuator wirkende Kraft oder das von dem Motor auf den Aktuator wirkende Drehmoment proportional in einem Bereich zu der durch den Kraft-Sensor gemessenen Betrag der auf die Bedieneinrichtung wirkenden Kraft ist, bedeutet, dass es zumindest einen Kraft-Bereich und/oder Drehmoment-Bereich gibt, in dem es die Proportionalität gibt. Es kann dabei vorgesehen sein, dass eine Mindestkraft oder ein Mindestdrehmoment notwendig ist und es kann auch eine Maximalkraft oder ein Maximaldrehmoment vorgesehen sein, ab dem der Motor dann bevorzugt mit maximaler Kraft beziehungsweise maximalem Drehmoment betrieben wird.

Durch die Proportionalität wird sichergestellt, dass dem Anwender durch unterschiedlich starkes Drücken der Bedieneinrichtung ein Eindruck dafür gegeben werden kann, mit welcher Kraft das motorgestützte oder motorunterstützte Auspressen des dentalen Materials beziehungsweise der dentalen Abformmasse erfolgt.

Bei derartigen Auspressvorrichtungen kann vorgesehen sein, dass die Proportionalität einstellbar ist, vorzugsweise mit einem Bedienelement manuell einstellbar ist.

Hierdurch kann die Auspressvorrichtung für unterschiedlich zähe dentale Materialien beziehungsweise Abformmassen aber auch für unterschiedlich kräftige Anwender eingestellt werden. Dadurch kann die gesamte Bandbreite vom Anwender möglicher unterschiedlich kräftiger Bedienungen der Bedieneinrichtung genutzt werden, um dem Anwender ein möglichst genaues haptisches Gefühl für den Auspressvorgang zu geben.

Es kann auch vorgesehen sein, dass mit dem Kraft-Sensor neben dem Betrag der auf die Bedieneinrichtung wirkenden Kraft und/oder des auf die Bedieneinrichtung wirkenden Drehmoments auch die Richtung der Kraft und/oder des Drehmoments messbar ist, wobei vorzugsweise die Richtung der Kraft und/oder des Drehmoments zur Steuerung des Motors mit der Steuerung verwendbar ist.

Hierdurch können entweder zusätzliche Funktionen der Auspressvorrichtung bereitgestellt werden oder der Auspressvorgang kann noch genauer gesteuert werden, indem durch die Richtung der auf die Bedieneinrichtung wirkenden Kraft eine weitere Verstärkung der Motorleistung und damit des Auspressvorgangs erreicht werden kann. Die zusätzliche Information kann insbesondere für eine feinere Abstufung der durch den Motor bereitgestellten Kraft beim Auspressen verwendet werden.

Ferner kann vorgesehen sein, dass an einer Vorderseite des Aktuators zumindest ein Teller befestigt ist, mit dem der zumindest eine Austragskolben des Kartuschensystems bedienbar ist.

Hierdurch kann der zumindest eine Austragskolben flächenbündig mit dem zumindest einen Teller angetrieben werden. Dadurch kann ein gleichmäßiger Vortrieb des zumindest einen Austragskolbens des Kartuschensystems erreicht werden.

Gemäß einer bevorzugten Weiterbildung kann vorgesehen sein, dass die Abhängigkeit einer auf den Aktuator wirkenden Leistung oder Kraft des Motors von dem durch den Kraft-Sensor gemessenen Betrag der auf die Bedieneinrichtung wirkenden Kraft und/oder des auf die Bedieneinrichtung wirkenden Drehmoments einstellbar ist.

Hierdurch kann die Auspressvorrichtung für unterschiedlich zähe dentale Materialien beziehungsweise Abformmassen aber auch für unterschiedlich kräftige Anwender eingestellt werden. Dadurch kann das gesamte Bandbreite vom Anwender möglicher unterschiedlich kräftiger Bedienungen der Bedieneinrichtung genutzt werden, um dem Anwender ein möglichst genaues haptisches Gefühl für den Auspressvorgang zu geben.

Bevorzugt kann ferner vorgesehen sein, dass die Bedieneinrichtung derart mit dem Aktuator verbunden ist, dass eine auf die Bedieneinrichtung wirkende Kraft und/oder ein auf die Bedieneinrichtung wirkendes Drehmoment auf den Aktuator zum Antreiben des zumindest einen Austragskolbens des Kartuschensystems übertragbar ist, wobei bevorzugt die Kraft und/oder das Drehmoment mechanisch übertragbar ist, besonders bevorzugt über einen Hebel und/oder ein Getriebe übertragbar ist.

Hierdurch kann ein Teil der vom Anwender der Auspressvorrichtung aufgebrachten Kraft zum Vortrieb des Aktuators verwendet werden. Hierdurch wird zum einen Energie gespart und zum anderen bleibt die Auspressvorrichtung theoretisch auch ohne Energieversorgung noch einsetzbar. Dadurch können auch niedrig viskose dentale Materialien beziehungsweise Abformmassen ohne Motorunterstützung mit der gleichen Auspressvorrichtung gefördert werden. Zudem ergibt sich für den Anwender unmittelbar ein Gefühl für die zum Vortreiben des Aktuators benötigte Kraft.

Des Weiteren kann vorgesehen sein, dass die Auspressvorrichtung zum Auspressen von Kartuschensystemen für dentale Abformmassen geeignet ist, insbesondere von Zweikomponenten-Kartuschen für dentale Abformmassen geeignet ist, und hierfür ein Befestigungselement aufweist, das an dem Kartuschensystem befestigbar ist, wobei bevorzugt das Kartuschensystem ein Volumen zwischen 5 ml und 100 ml der dentalen Abformmasse bereitstellt, besonders bevorzugt ein Volumen zwischen 25 ml und 100 ml bereitstellt, ganz besonders bevorzugt ein Volumen von 50 ml bereitstellt.

Hierdurch ist die Auspressvorrichtung auf die Größe für dentale Abformmassen typische Kartuschensysteme abgestimmt.

Es kann auch vorgesehen sein, dass die Auspressvorrichtung zum Auspressen von Kartuschensystemen für dentale Abformmassen des Typs 1 oder des Typs 0 gemäß DIN ISO 4823:2015 geeignet ist.

Hierdurch ist die Auspressvorrichtung auch für besonders zähe Abformmassen geeignet und bietet dem Anwender auch bei sehr großer Viskosität der dentalen Abformmasse ein haptisches Feedback bei der Anwendung.

Die der vorliegenden Erfindung zugrundeliegenden Aufgaben werden auch gelöst durch ein Verfahren zum Antreiben zumindest eines Austragskolbens eines Kartuschensystems mit einer Auspressvorrichtung, gekennzeichnet durch die Schritte
A) Bedienen einer Bedieneinrichtung mit einer auf die Bedieneinrichtung wirkenden Kraft,
B) Messen des Betrags einer auf die Bedieneinrichtung wirkenden Kraft und/oder eines auf die Bedieneinrichtung wirkenden Drehmoments mit zumindest einem Kraft-Sensor,
C) Antreiben eines Aktuators mit einem Motor, wobei der Aktuator zum Vortreiben zumindest eines Austragskolbens eines Kartuschensystems vorgesehen ist und wobei der Motor in Abhängigkeit von dem Betrag der gemessenen Kraft und/oder des gemessenen Drehmoments gesteuert wird.

Dabei kann vorgesehen sein, dass das Verfahren mit einer erfindungsgemäßen Auspressvorrichtung durchgeführt wird.

Das Verfahren weist dann die zu den erfindungsgemäßen Auspressvorrichtungen genannten Vorteile auf.

Ferner kann vorgesehen sein, dass der Aktuator zusätzlich mechanisch von der Bedieneinrichtung angetrieben wird.

Hierdurch kann ein Teil der vom Anwender der Auspressvorrichtung aufgebrachten Kraft zum Vortrieb des Aktuators verwendet werden. Hierdurch wird zum einen Energie gespart und zum anderen bleibt das Verfahren und die Auspressvorrichtung theoretisch auch ohne Energieversorgung einsetzbar. Zudem ergibt sich für den Anwender unmittelbar ein Gefühl für die zum Auspressen benötigte Kraft.

Des Weiteren kann vorgesehen sein, dass die von dem Motor auf den Aktuator wirkende Kraft oder das von dem Motor auf den Aktuator wirkende Drehmoment in einem Bereich proportional zu der durch den Kraft-Sensor gemessenen Betrag der auf die Bedieneinrichtung wirkenden Kraft eingestellt wird, wobei bevorzugt eine Proportionalitätskontante eingestellt wird.

Hierdurch kann das Verfahren für unterschiedlich zähe dentale Materialien beziehungsweise Abformmassen aber auch für unterschiedlich kräftige Anwender angewendet werden. Dadurch kann die gesamte Bandbreite vom Anwender möglicher unterschiedlich kräftiger Bedienungen der Bedieneinrichtung genutzt werden, um dem Anwender ein möglichst genaues Gefühl für den Auspressvorgang zu geben.

Der Erfindung liegt die überraschende Erkenntnis zugrunde, dass es durch die Verwendung eines Motors und durch die Steuerung des Motors in Abhängigkeit von der Kraft oder dem Drehmoment, das auf die Bedieneinrichtung wirkt, möglich ist, auch hochviskose dentale Abformassen mit der erfindungsgemäßen Auspressvorrichtung auszupressen, aber gleichzeitig der Anwender durch die notwendige aufzubringende Kraft ein haptisches Gefühl dafür hat, wie leicht beziehungsweise schwer sich der Aktuator vortreiben lässt und damit, wie viel Widerstand sich der aus der Kartusche ausgepressten dentalen Abformmasse oder dem aus der Kartusche ausgepressten dentalen Material entgegenstellt. Dadurch ist eine haptische Kontrolle des Vortriebs des Aktuators möglich und der Anwender kann diese sensorische Information und seine Erfahrung bei derartigen Auspressvorgängen nutzen. Zudem können so auch Erfahrungen, die bei der Anwendung von niedrigviskosen dentalen Materialien beziehungsweise Abformmassen gewonnen wurden, bei der Anwendung von hochviskosen dentalen Abformassen genutzt werden. Es wurde im Rahmen der vorliegenden Erfindung gefunden, dass es hilfreich ist, wenn die haptische Erfahrung des Anwenders auch zum Austreiben von zähen und hochviskosen dentalen Materialien beziehungsweise Abformmassen nutzbar gemacht werden kann.

Die der Erfindung zugrundeliegende Idee ist, dass die Applikationsart für die Applikation der kleineren Kartuschen, mit denen das Abformmaterial extraoral oder im Mund appliziert wird, nicht verändert wird. Es sollen weiterhin die bekannten und herkömmlichen Kartuschen und Mischer benutzt werden können wie bisher. Solche Kartuschen sind beispielsweise von den Firmen Sulzer Mixpac und Ritter erhältlich. Ferner soll besonders bevorzugt der Anwender wie gewohnt eine Art Pistole in der Hand halten können, in die die Kartusche samt Mischer eingelegt wird. Durch ein Bedienen der Kartuschenpistole soll der Anwender in die Lage versetzt werden, das dentale Material beziehungsweise die dentale Abformmasse so auszutragen, wie er dies auch für niedrigviskosere Dentalabformassen gewohnt ist.

Die Auspressvorrichtung wirkt erfindungsgemäß als Unterstützung für den Bediener der Auspressvorrichtung. Der Antrieb des Aktuators wird dabei wie die Bremsen eines Autos mit einem Bremskraftverstärker angetrieben oder wie eine Drehmoment-abhängige Zuschaltung eines Elektromotors bei manchen E-Bikes angetrieben. Analog wie bei E-Bikes, bei denen ein Drehmomentsensor abhängig von der eingesetzten Pedalkraft des Fahrradfahrers über einen Motor das Pedalieren unterstützt, wird bei der erfindungsgemäßen Auspressvorrichtung in Abhängigkeit von der Kraft, die auf die Bedieneinrichtung wirkt, die durch den Aktuator wirkende Auspresskraft unterstützt oder komplett bereitgestellt.

Neuartig ist, dass in der Auspressvorrichtung beziehungsweise in der Auspresspistole ein Motor und eine Energieversorgung plus Steuerung derart untergebracht wird, dass der Motor Sensor-gesteuert in Abhängigkeit von der Kraft oder dem Drehmoment, die oder das der Anwender auf Pistolengriff und Abzug beziehungsweise die Bedieneinrichtung aufbringt, den Anwender beim Auspressen und gegebenenfalls Mischen des dentalen Abformmaterials unterstützt.

Die Verbindung zu den Austragskolben des Kartuschensystems kann dabei rein elektronisch beziehungsweise elektromechanisch sein. Es ist aber auch eine mechanische Verbindung zur Bedieneinrichtung möglich, wobei der Motor dann unterstützend eingreift.

Vergleichbare Systeme sind beispielsweise durch die Motorenhersteller IQ, Brose, Bosch, Yamaha, Panasonic und Fazua bekannt. So bietet beispielsweise der Hersteller "Rocky Mountain" ein Fahrrad mit einem auf der Kette befindlichen Drehmomentsensor an, der über eine intelligente Steuerung den Motor ansteuert, der auf ein klassisches System aufgeschaltet ist. Solche Systeme lassen sich grundsätzlich beziehungsweise prinzipiell auf erfindungsgemäße Auspressvorrichtungen übertragen.

Die Vorteile erfindungsgemäßer Auspressvorrichtungen sind die geringeren manuell aufzubringenden Auspresskräfte, die dennoch Gefühl für die Menge und Fördergeschwindigkeit des Abformmaterials liefern. Zudem ist eine exakte Dosierung möglich. Es besteht ferner die Möglichkeit, auch Typ 0 "Putty" Materialien zu fördern und kleinere beziehungsweise räumlich kompaktere Mischer zu verwenden. Allgemein erfordert die erfindungsgemäße Auspressvorrichtung nur eine geringe Umstellung für den Anwender.

Im Folgenden werden weitere Ausführungsbeispiele der Erfindung anhand von zwei schematisch dargestellten Figuren erläutert, ohne jedoch dabei die Erfindung zu beschränken. Dabei zeigt:
Figur 1: eine schematische Querschnittansicht einer erfindungsgemäßen Auspressvorrichtung, in die ein Kartuschensystem enthaltend die Ausgangskomponenten für eine dentale Abformmasse eingesetzt ist; und
Figur 2: eine schematische Querschnittansicht einer alternativen erfindungsgemäßen Auspressvorrichtung, in die ein Kartuschensystem enthaltend die Ausgangskomponenten für eine dentale Abformmasse eingesetzt ist.

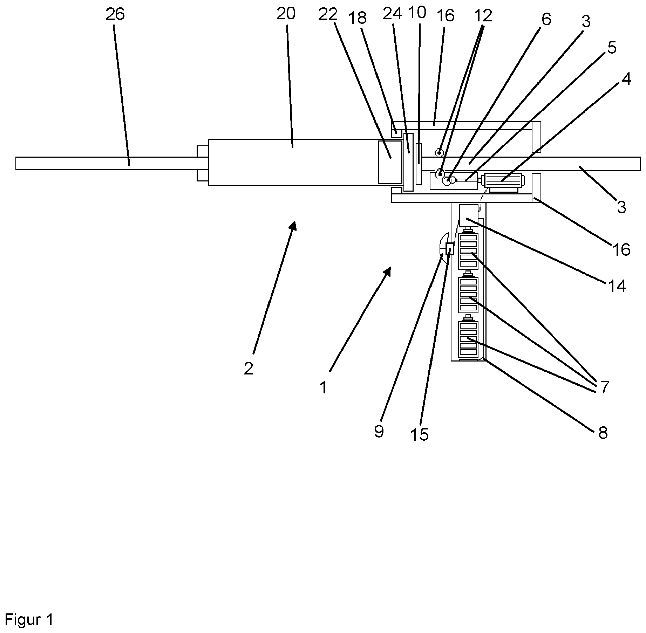

Figur 1 zeigt eine schematische Querschnittansicht einer erfindungsgemäßen Auspressvorrichtung 1 (in Figur 1 der rechte Bereich) in die ein herkömmliches Kartuschensystem 2 (in Figur 1 der linke Bereich) eingesetzt sein kann. Das Kartuschensystem 2 kann Ausgangskomponenten einer dentalen Abformmasse enthalten. Die Auspressvorrichtung 1 kann einen Aktuator 3 aufweisen, der als Schubstange ausgebildet sein kann. Der Aktuator 3 kann auch durch zwei parallel zueinander angeordnete Schubstangen realisiert werden, um damit den Inhalt zweier parallel zueinander liegender Kartuschen auspressen zu können. Der Aktuator 3 kann über einen Motor 4 anzutreiben sein. Der Motor 4 kann bei einer bevorzugten Ausführung als Elektromotor ausgeführt sein. Der Motor 4 kann über eine Kupplung 5 und über ein Getriebe 6 mit zumindest einem Antriebselement 12 verbunden sein. Zudem kann auch wenigstens eine Antriebswelle vorgesehen sein. Das zumindest eine Antriebselement 12 kann derart mit dem Aktuator 3 verbunden sein, dass der Aktuator 3 über das zumindest eine Antriebselement 12 in einer axialen Richtung linear anzutreiben ist. Das zumindest eine Antriebselement 12 kann beispielsweise zumindest ein Zahnrad sein, wobei der Aktuator 3 dann vorzugsweise zumindest eine Zahnstange aufweisen kann oder als zumindest eine Zahnstange ausgeführt sein kann, so dass durch Drehen des zumindest einen Zahnrads die zumindest eine Zahnstange und damit der Aktuator 3 in axialer Richtung linear angetrieben wird. Andere Möglichkeiten zum Vortreiben des Aktuators 3 mit Hilfe des Motors 4 sind grundsätzlich bekannt und ebenfalls einsetzbar. Zur Energieversorgung des Motors 4 kann in der Auspressvorrichtung 1 ein Energiespeicher 7 in Form von mehreren Akkumulatoren oder Batteriezellen enthalten sein. Theoretisch kann auch eine Druckgaspatrone als Energiespeicher 7 verwendet werden, wenn als Motor 4 ein Druckluftmotor verwendet wird.

An einer Seite der Auspressvorrichtung 1 kann ein Griff 8 angeordnet sein, in dem der Energiespeicher 7 angeordnet sein kann. Die Auspressvorrichtung 1 kann dadurch nach Art einer Kartuschenpistole aufgebaut werden. Der Anwender kann die Auspressvorrichtung 1 mit einer Hand an dem Griff 8 halten. Am Griff 8 kann ein Druckknopf 9 als Bedieneinrichtung der Auspressvorrichtung 1 angeordnet sein. Dadurch kann die Auspressvorrichtung 1 mit einer Hand bedienbar aufgebaut sein.

An der Spitze des Aktuators 3 (in Figur 1 am linken Ende des Aktuators 3) kann ein Teller 10 vorgesehen sein, wobei mit einer Seite des Tellers 10 ein Druck auf das Kartuschensystem 2 ausgeübt werden kann, um den Inhalt des Kartuschensystems 2 auszupressen und gegebenenfalls zu applizieren.

Eine Steuerung 14 kann vorgesehen sein, um den Motor 4 zu steuern. Dabei kann die vom Motor 4 abgegebene Leistung beziehungsweise Kraft mit der Steuerung 14 gesteuert oder geregelt werden.

Ein Kraft-Sensor 15 kann am Griff 8 angeordnet sein und mit dem Druckknopf 9 verbunden sein. Mit dem Kraft-Sensor 15 kann die Kraft, mit der der Druckknopf 9 gedrückt beziehungsweise bedient wird, gemessen werden. Der Kraft-Sensor 15 kann mit der Steuerung 14 verbunden sein, so dass die Steuerung 14 Zugriff auf die Messdaten, das Signal oder die Messgröße des Kraft-Sensors 15 hat. Die Steuerung 14 kann derart programmiert, geschaltet oder derart aufgebaut sein, dass die Leistung beziehungsweise die Kraft des Motors 4 in Abhängigkeit von der mit dem Kraft-Sensor 15 gemessenen Kraft gesteuert wird. Bevorzugt kann die Leistung beziehungsweise die Kraft des Motors 4 proportional oder besonders bevorzugt in einer linearen Abhängigkeit von der mit dem Kraft-Sensor 15 gemessenen Kraft gesteuert werden. Es kann vorgesehen sein, dass die Proportionalität oder die Abhängigkeit der Einstellung der Leistung beziehungsweise der Kraft des Motors 4 von der mit dem Kraft-Sensor 15 gemessenen Kraft mit Hilfe eines Bedienelements (nicht gezeigt) einstellbar ist, insbesondere manuell einstellbar ist.

Der Griff 8 kann mit einem Gehäuse 16 der Auspressvorrichtung 1 verbunden sein. Dabei kann der Griff 8 Teil des Gehäuses 16 sein. Das Gehäuse 16 und der Griff 8 können aus einem Kunststoff mit Hilfe einer Spritzgusstechnik geformt werden. Der Aktuator 3 kann aus dem Gehäuse 16 hervorragen. An einer Seite der Auspressvorrichtung 1 kann ein Befestigungselement 18 zum Befestigen des Kartuschensystems 2 angeordnet sein. Das Befestigungselement 18 kann mit dem Gehäuse 16 verbunden sein oder auch einteilig mit dem Gehäuse 16 ausgeführt sein.

Der Aktuator 3 kann gegen das Befestigungselement 18 und das Gehäuse 16 in axialer Richtung verschiebbar sein, so dass durch eine Bewegung des Aktuators 3 eine Kraft auf ein am Befestigungselement 18 befestigtes Kartuschensystem 2 ausgeübt werden kann.

Das Kartuschensystem 2 kann eine Kartusche 20 oder auch zwei parallel zueinander angeordnete Kartuschen 20 (in Figur 1 nicht beide zu sehen) aufweisen. In der Kartusche 20 des Kartuschensystems 2 kann ein Austragskolben 22 angeordnet sein oder in den beiden Kartuschen 20 des Kartuschensystems 2 kann jeweils ein Austragskolben 22 angeordnet sein. Der oder die Austragskolben 22 können in Längsrichtung der Kartusche(n) 20 verschiebbar sein, so dass ein Inhalt der Kartuschen(n) 20 aus der Kartusche 20 oder den Kartuschen 20 auszutreiben ist. An der Rückseite des Kartuschensystems 2 (in Figur 1 rechts) kann ein Gegenbefestigungselement 24 angeordnet sein, so dass Gegenbefestigungselement 24 an dem Befestigungselement 18 befestigt werden kann (beispielsweise nach Art eines BajonettVerschlusses oder nach Art eines Schraubverschlusses).

An der Vorderseite des Kartuschensystems 2 (in Figur 1 links) kann ein Austragsrohr 26 mit integriertem statischem oder auch aktivem Mischer angeordnet sein. Der Inhalt der Kartusche(n) 20 kann mit dem Mischer beim Austreiben des Inhaltes der Kartuschen(n) 20 durchmischt werden. Durch Vortreiben des Austragskolbens 22 oder der Austragskolben 22 kann der Inhalt der Kartusche(n) 20 durch das Austragsrohr 26 ausgepresst werden. Der Austragskolben 22 kann oder die Austragskolben 22 können mit dem Aktuator 3 der Auspressvorrichtung 1 angetrieben werden, wenn das Kartuschensystem 2 mit der Auspressvorrichtung 1 verbunden ist.

Ein erfindungsgemäßes Verfahren kann beispielsweise folgendermaßen ablaufen. Ein Kartuschensystem 2 kann mit der Auspressvorrichtung 1 verbunden werden oder verbunden sein. Der Druckknopf 9 kann vom Anwender gedrückt werden. Je nach Stärke des Drucks, das heißt, je nach der Kraft, die auf den Druckknopf 9 ausgeübt wird, kann die Steuerung 14 den Motor 4 mit hoher oder niedriger Leistung oder mit großer oder geringer Kraft betreiben. Dadurch kann der Aktuator 3 mit großer Kraft oder mit geringer Kraft vorgetrieben werden. Der Anwender erhält so ein haptisches Gefühl dafür, mit welcher Kraft das Kartuschensystem 2 ausgepresst wird.

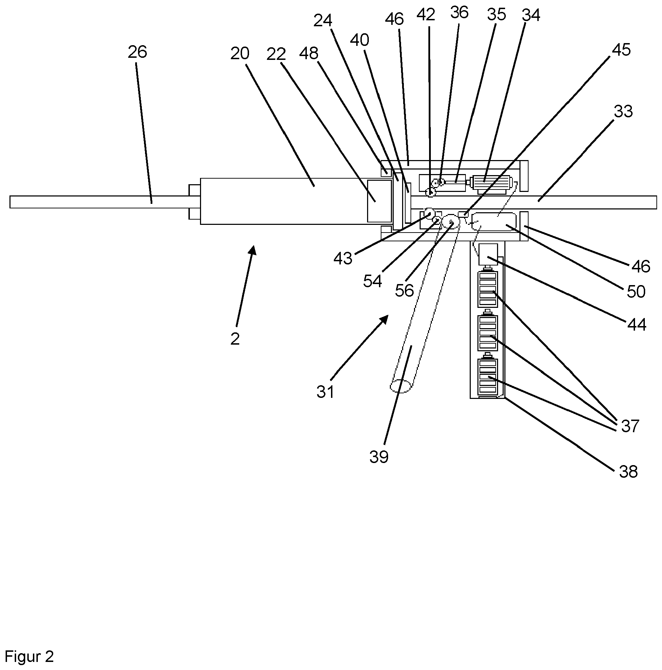

Figur 2 zeigt eine schematische Querschnittansicht einer alternativen erfindungsgemäßen Auspressvorrichtung 31 (in Figur 2 der rechte Bereich) in die ein herkömmliches Kartuschensystem 2 (in Figur 2 der linke Bereich), wie das nach Figur 1, eingesetzt sein beziehungsweise werden kann. Das Kartuschensystem 2 kann Ausgangskomponenten einer dentalen Abformmasse enthalten. Die Auspressvorrichtung 31 kann einen Aktuator 33 aufweisen, der als Schubstange ausgebildet sein kann. Der Aktuator 33 kann auch durch zwei parallel zueinander angeordnete Schubstangen realisiert werden, um damit den Inhalt zweier parallel zueinander liegender Kartuschen auspressen zu können. Der Aktuator 33 kann manuell anzutreiben sein, wobei der manuelle Antrieb über einen Motor 34 verstärkt beziehungsweise unterstützt werden kann. Der Motor 34 kann bei einer bevorzugten Ausführung als Elektromotor ausgeführt sein. Der Motor 34 kann über eine Kupplung 35 und über ein Getriebe 36 mit zumindest einem Antriebselement 42 verbunden sein. Zudem kann auch wenigstens eine Antriebswelle vorgesehen sein. Das zumindest eine Antriebselement 42 kann derart mit dem Aktuator 33 verbunden sein, dass der Aktuator 33 über das zumindest eine Antriebselement 42 in einer axialen Richtung linear anzutreiben ist. Das zumindest eine Antriebselement 42 kann beispielsweise zumindest ein Zahnrad sein, wobei der Aktuator 33 dann vorzugsweise zumindest eine Zahnstange als Schubstange aufweisen kann oder als zumindest eine Zahnstange ausgeführt sein kann, so dass durch Drehen des zumindest einen Zahnrads die zumindest eine Zahnstange und damit der Aktuator 33 in axialer Richtung linear angetrieben wird. Andere Möglichkeiten zum Unterstützen des Vortriebs des Aktuators 33 mit Hilfe des Motors 34 sind grundsätzlich bekannt und ebenfalls einsetzbar. Zur Energieversorgung des Motors 34 kann in der Auspressvorrichtung 31 ein elektrischer Energiespeicher 37 in Form von mehreren Akkumulatoren oder Batteriezellen enthalten sein.

An einer Seite der Auspressvorrichtung 31 kann ein Griff 38 angeordnet sein, in dem der Energiespeicher 37 angeordnet sein kann. Die Auspressvorrichtung 31 kann dadurch nach Art einer Kartuschenpistole aufgebaut werden. Der Anwender kann die Auspressvorrichtung 31 mit einer Hand an dem Griff 38 halten. Im Bereich des Griffs 38 kann ein schwenkbarer Hebel 39 als Bedieneinrichtung der Auspressvorrichtung 31 angeordnet sein. Dadurch kann die Auspressvorrichtung 31 mit einer Hand bedienbar aufgebaut sein.

An der Spitze des Aktuators 33 (in Figur 2 am linken Ende des Aktuators 33) kann zumindest ein Teller 40 vorgesehen sein, wobei mit einer Seite des zumindest einen Tellers 40 ein Druck auf das Kartuschensystem 2 ausgeübt werden kann, um den Inhalt des Kartuschensystems 2 auszupressen und gegebenenfalls zu applizieren.

Der Hebel 39 kann über ein Antriebselement 43 mit dem Aktuator 33 verbunden sein. Zwischen dem Antriebselement 43 und dem Hebel 39 kann noch ein Getriebe 54 angeordnet sein, mit dem die von dem Hebel 39 aufgebrachte Kraft beziehungsweise das mit dem Hebel 39 aufgebrachte Drehmoment bei der Übertragung auf das Antriebselement 43 und damit auf den Aktuator 33 verändert werden kann, insbesondere erhöht werden kann. Durch ein Bedienen des Hebels 39, bei dem der Hebel 39 um eine Schwenkachse 56 geschwenkt beziehungsweise gedreht wird, kann der Aktuator 33 über das Antriebselement 43 manuell angetrieben werden. Dadurch kann der Anwender aus der benötigten Kraft beziehungsweise aus dem benötigten Drehmoment hierfür Rückschlüsse über den Widerstand und damit über die Anwendungssituation ziehen. Für sehr zähe und hochviskose Dentalabformmassen reicht die manuell aufbringbare Kraft oftmals nicht mehr aus. Würde man die Auspressvorrichtung 31 anders auslegen und eine Übersetzung durch das Getriebe 54 so wählen, dass ein Hub des Hebels 39 nur eine äußerst geringe Menge der dentalen Abformmasse auspresste, wäre eine sehr große Anzahl von Hubbewegungen des Hebels 39 notwendig. Da jede Hubbewegung zu einer Bewegung der Applikationsspitze führt, wäre eine solche Auspressvorrichtung nur schwierig präzise einzusetzen und es könnte zu einer ungenauen Applikation der Abformmasse beziehungsweise des Materials kommen. Zudem würde der Auspressvorgang durch die große Anzahl an notwendigen Hubbewegungen viel Zeit in Anspruch nehmen. Daher kann erfindungsgemäß eine Unterstützung des Antriebs des Aktuators 33 durch den Motor 34 bereitgestellt werden.

Ein Transformator 44 kann die vom Energiespeicher 37 zur Verfügung gestellte elektrische Spannung auf eine für den Motor 34 geeignete elektrische Spannung transformieren. Eine Steuerung 50 kann vorgesehen sein, um den Motor 34 zu steuern. Dabei kann die vom Motor 34 abgegebene Leistung beziehungsweise Kraft mit der Steuerung 50 gesteuert oder geregelt werden.

Ein Kraft-Sensor 45 kann in der Auspressvorrichtung 31 angeordnet sein und mit dem Hebel 39 verbunden sein. Mit dem Kraft-Sensor 45 kann die Kraft, mit der der Hebel 39 gedrückt beziehungsweise bedient wird, und/oder das Drehmoment, mit dem der Hebel 39 gedrückt beziehungsweise bedient wird, gemessen werden. Der Kraft-Sensor 45 kann mit der Steuerung 50 verbunden sein, so dass die Steuerung 50 Zugriff auf die Messdaten, das Signal oder die Signale oder die Messgröße(n) des Kraft-Sensors 45 hat. Die Steuerung 50 kann derart programmiert, geschaltet oder derart aufgebaut sein, dass die Leistung beziehungsweise die Kraft des Motors 34 in Abhängigkeit von der mit dem Kraft-Sensor 45 gemessenen Kraft und/oder dem gemessenen Drehmoment gesteuert wird. Bevorzugt kann die Leistung beziehungsweise die Kraft des Motors 34 proportional oder besonders bevorzugt in einer linearen Abhängigkeit von der mit dem Kraft-Sensor 45 gemessenen Kraft und/oder von dem mit dem Kraft-Sensor 45 gemessenen Drehmoment gesteuert werden. Es kann vorgesehen sein, dass die Proportionalität oder die Abhängigkeit der Einstellung der Leistung beziehungsweise der Kraft des Motors 34 von der mit dem Kraft-Sensor 45 gemessenen Kraft oder des mit dem Kraft-Sensor 45 gemessenen Drehmoments mit Hilfe eines Bedienelements (nicht gezeigt) einstellbar ist, insbesondere manuell einstellbar ist.

Der Griff 38 kann mit einem Gehäuse 46 der Auspressvorrichtung 31 verbunden sein. Dabei kann der Griff 38 Teil des Gehäuses 46 sein. Das Gehäuse 46, der Griff 38 und der Hebel 39 können aus einem Kunststoff mit Hilfe einer Spritzgusstechnik geformt werden. Der Aktuator 33 kann aus dem Gehäuse 46 hervorragen. An einer Seite der Auspressvorrichtung 31 kann ein Befestigungselement 48 zum Befestigen des Kartuschensystems 2 angeordnet sein. Das Befestigungselement 48 kann mit dem Gehäuse 46 verbunden sein oder auch einteilig mit dem Gehäuse 46 ausgeführt sein.

Der Aktuator 33 kann gegen das Befestigungselement 48 und das Gehäuse 46 in axialer Richtung verschiebbar sein, so dass durch eine Bewegung des Aktuators 33 eine Kraft auf ein am Befestigungselement 48 befestigtes Kartuschensystem 2 ausgeübt werden kann.

Das Kartuschensystem 2 kann eine Kartusche 20 oder auch zwei parallel zueinander angeordnete Kartuschen 20 (in Figur 2 nicht beide zu sehen) aufweisen. In der Kartusche 20 des Kartuschensystems 2 kann ein Austragskolben 22 angeordnet sein oder in den beiden Kartuschen 20 des Kartuschensystems 2 kann jeweils ein Austragskolben 22 angeordnet sein. Der oder die Austragskolben 22 können in Längsrichtung der Kartusche(n) 20 verschiebbar sein, so dass ein Inhalt der Kartuschen(n) 20 aus der Kartusche 20 oder den Kartuschen 20 auszutreiben ist. An der Rückseite des Kartuschensystems 2 (in Figur 2 rechts) kann ein Gegenbefestigungselement 24 angeordnet sein, so dass Gegenbefestigungselement 24 an dem Befestigungselement 48 befestigt werden kann (beispielsweise nach Art eines BajonettVerschlusses oder nach Art eines Schraubverschlusses).

An der Vorderseite des Kartuschensystems 2 (in Figur 2 links) kann ein Austragsrohr 26 mit integriertem statischem oder auch dynamischem (aktivem) Mischer angeordnet sein. Der Inhalt der Kartusche(n) 20 kann mit dem Mischer beim Austreiben des Inhaltes der Kartuschen(n) 20 durchmischt werden. Durch Vortreiben des Austragskolbens 22 oder der Austragskolben 22 kann der Inhalt der Kartusche(n) 20 durch das Austragsrohr 26 ausgepresst werden. Der Austragskolben 22 kann oder die Austragskolben 22 können mit dem Aktuator 33 der Auspressvorrichtung 31 angetrieben werden, wenn das Kartuschensystem 2 mit der Auspressvorrichtung 31 verbunden ist.

Ein erfindungsgemäßes Verfahren kann beispielsweise folgendermaßen ablaufen. Ein Kartuschensystem 2 kann mit der Auspressvorrichtung 31 verbunden werden oder verbunden sein. Der Hebel 39 kann vom Anwender bedient werden. Die am Hebel 39 aufgebrachte Kraft beziehungsweise das am Hebel 39 aufgebrachte Drehmoment kann über das Getriebe 54 und das Antriebselement 43 auf den Aktuator 33 übertragen werden. Zusätzlich kann der Aktuator 33 aber auch über den Motor 34 angetrieben werden und damit die Bewegung des Aktuators 33 motorgetrieben unterstützt werden. Je nach Stärke des Schwenkens des Hebels 39, das heißt, je nach der Kraft, die auf den Hebel 39 ausgeübt wird, kann die Steuerung 50 den Motor 34 mit hoher oder niedriger Leistung oder mit großer oder geringer Kraft betreiben. Die Messung hierzu kann mit dem Kraft-Sensor 45 erfolgen. Dadurch kann der Aktuator 33 mit großer Kraftunterstützung oder mit geringer Kraftunterstützung durch den Motor 34 vorgetrieben werden. Der Anwender erhält so ein haptisches Gefühl dafür, mit welcher Kraft das Kartuschensystem 2 ausgepresst wird.

Die in der voranstehenden Beschreibung, sowie den Ansprüchen, Figuren und Ausführungsbeispielen offenbarten Merkmale der Erfindung können sowohl einzeln, als auch in jeder beliebigen Kombination für die Verwirklichung der Erfindung in ihren verschiedenen Ausführungsformen wesentlich sein.

### Bezugszeichenliste

- 1, 31: Auspressvorrichtung
- 2: Kartuschensystem
- 3, 33: Aktuator
- 4, 34: Motor
- 5, 35: Kupplung
- 6, 36: Getriebe
- 7, 37: Energiespeicher
- 8, 38: Griff
- 9: Druckknopf
- 10, 40: Teller
- 12, 42: Antriebselement
- 14: Steuerung
- 15, 45: Kraft-Sensor
- 16, 46: Gehäuse
- 18, 48: Befestigungselement
- 20: Kartusche
- 22: Austragskolben
- 24: Gegenbefestigungselement
- 26: Austragsrohr mit Mischer
- 39: Hebel
- 43: Antriebselement
- 44: Transformator
- 50: Steuerung
- 54: Getriebe
- 56: Schwenkachse

## Patentansprüche

1. Auspressvorrichtung (1, 31) zum Austreiben eines hochviskosen dentalen Materials, insbesondere einer dentalen Abformmasse, aus einem Kartuschensystem (2), die Auspressvorrichtung (1, 31) aufweisend einen Aktuator (3, 33), einen Motor (4, 34), eine Steuerung (14, 50), eine Bedieneinrichtung und zumindest einen Kraft-Sensor (15, 45), wobei mit dem Aktuator (3, 33) zumindest ein Austragskolben (22) des Kartuschensystems (2) antreibbar ist, wobei der Aktuator (3, 33) mit dem Motor (4, 34) antreibbar ist oder mit dem Motor (4, 34) ein mechanisch übertragenes Antreiben des Aktuators (3, 33) unterstützbar ist, wobei die Bedieneinrichtung manuell bedienbar ist, wobei der zumindest eine Kraft-Sensor (15, 45) mit der Bedieneinrichtung derart verbunden ist, dass zumindest der Betrag einer auf die Bedieneinrichtung wirkenden Kraft und/oder zumindest der Betrag eines auf die Bedieneinrichtung wirkenden Drehmoments messbar ist, und wobei mit der Steuerung (14, 50) der Motor (4, 34) in Abhängigkeit von dem durch den zumindest einen Kraft-Sensor (15, 45) gemessenen Betrag der auf die Bedieneinrichtung wirkenden Kraft und/oder des auf die Bedieneinrichtung wirkenden Drehmoments steuerbar ist.

2. Auspressvorrichtung (1, 31) nach Anspruch 1, **dadurch gekennzeichnet, dass** die Auspressvorrichtung (1, 31) eine Kartuschenpistole ist.

3. Auspressvorrichtung (1, 31) nach Anspruch 1 oder 2, **dadurch gekennzeichnet, dass** die Bedieneinrichtung ein Abzug, ein Hebel (39) oder ein Druckknopf (19) ist, wobei vorzugsweise die Auspressvorrichtung (1, 31) über den Abzug, den Hebel (39) oder den Druckknopf (19) mit der gleichen Hand bedienbar ist, mit der die Auspressvorrichtung (1, 31) einhändig zu halten ist.

4. Auspressvorrichtung (1, 31) nach einem der vorangehenden Ansprüche, **dadurch gekennzeichnet, dass**
die Auspressvorrichtung (1, 31) einen Energiespeicher (7, 37) aufweist, wobei die Energie zum Antreiben des Motors (4, 34) aus dem Energiespeicher (7, 37) entnehmbar ist, wobei vorzugsweise der Energiespeicher (7, 37) ein Batteriespeicher, ein Akkumulator oder ein Druckgasreservoir ist.

5. Auspressvorrichtung (1, 31) nach einem der vorangehenden Ansprüche, **dadurch gekennzeichnet, dass**
der zumindest eine Kraft-Sensor (15, 45) zum Messen des Betrags wenigstens einer linearen Kraft und/oder wenigstens eines Drehmoments geeignet oder vorgesehen ist.

6. Auspressvorrichtung (1, 31) nach einem der vorangehenden Ansprüche, **dadurch gekennzeichnet, dass**
die Steuerung (14, 50) den Motor (4, 34) derart steuert, dass die von dem Motor (4, 34) auf den Aktuator (3, 33) wirkende Kraft oder das von dem Motor (4, 34) auf den Aktuator (3, 33) wirkende Drehmoment in einem Kraft-Bereich oder Drehmoment-Bereich proportional zu der durch den Kraft-Sensor (15, 45) gemessenen Betrag der auf die Bedieneinrichtung wirkenden Kraft ist oder des auf die Bedieneinrichtung wirkenden Drehmoments ist.

7. Auspressvorrichtung (1, 31) nach Anspruch 6, **dadurch gekennzeichnet, dass** die Proportionalität einstellbar ist, vorzugsweise mit einem Bedienelement manuell einstellbar ist.

8. Auspressvorrichtung (1, 31) nach einem der vorangehenden Ansprüche, **dadurch gekennzeichnet, dass**
mit dem Kraft-Sensor (15, 45) neben dem Betrag der auf die Bedieneinrichtung wirkenden Kraft und/oder des auf die Bedieneinrichtung wirkenden Drehmoments auch die Richtung der Kraft und/oder des Drehmoments messbar ist, wobei vorzugsweise die Richtung der Kraft und/oder des Drehmoments zur Steuerung (14, 50) des Motors (4, 34) mit der Steuerung (14, 50) verwendbar ist.

9. Auspressvorrichtung (1, 31) nach einem der vorangehenden Ansprüche, **dadurch gekennzeichnet, dass**
an einer Vorderseite des Aktuators (3, 33) zumindest ein Teller (10, 40) befestigt ist, mit dem der zumindest eine Austragskolben (22) des Kartuschensystems bedienbar ist.

10. Auspressvorrichtung (1, 31) nach einem der vorangehenden Ansprüche, **dadurch gekennzeichnet, dass**
die Abhängigkeit einer auf den Aktuator (3, 33) wirkenden Leistung oder Kraft des Motors (4, 34) von dem durch den Kraft-Sensor (15, 45) gemessenen Betrag der auf die Bedieneinrichtung wirkenden Kraft und/oder des auf die Bedieneinrichtung wirkenden Drehmoments einstellbar ist.

11. Auspressvorrichtung (1, 31) nach einem der vorangehenden Ansprüche, **dadurch gekennzeichnet, dass**
die Bedieneinrichtung derart mit dem Aktuator (33) verbunden ist, dass eine auf die Bedieneinrichtung wirkende Kraft und/oder ein auf die Bedieneinrichtung wirkendes Drehmoment auf den Aktuator (33) zum Antreiben des zumindest einen Austragskolbens (22) des Kartuschensystems (2) übertragbar ist, wobei bevorzugt die Kraft und/oder das Drehmoment mechanisch übertragbar ist, besonders bevorzugt über einen Hebel (39) und/oder ein Getriebe (54) übertragbar ist.

12. Auspressvorrichtung (1, 31) nach einem der vorangehenden Ansprüche, **dadurch gekennzeichnet, dass**
die Auspressvorrichtung (1, 31) zum Auspressen von Kartuschensystemen (2) für dentale Abformmassen geeignet ist, insbesondere von Zweikomponenten-Kartuschen für dentale Abformmassen geeignet ist, und hierfür ein Befestigungselement (18, 48) aufweist, das an dem Kartuschensystem (2) befestigbar ist, wobei bevorzugt das Kartuschensystem (2) ein Volumen zwischen 5 ml und 100 ml der dentalen Abformmasse bereitstellt, besonders bevorzugt ein Volumen zwischen 25 ml und 100 ml der dentalen Abformmasse bereitstellt, ganz besonders bevorzugt ein Volumen von 50 ml bereitstellt, und/oder
die Auspressvorrichtung (1, 31) zum Auspressen von Kartuschensystemen (2) für dentale Abformmassen des Typs 1 oder des Typs 0 gemäß DIN ISO 4823:2015 geeignet ist.

13. Verfahren zum Antreiben zumindest eines Austragskolbens (22) eines Kartuschensystems (2) mit einer Auspressvorrichtung (1, 31), **gekennzeichnet durch** die Schritte
Bedienen einer Bedieneinrichtung mit einer auf die Bedieneinrichtung wirkenden Kraft, Messen des Betrags einer auf die Bedieneinrichtung wirkenden Kraft und/oder eines auf die Bedieneinrichtung wirkenden Drehmoments mit zumindest einem Kraft-Sensor (15,45),
Antreiben eines Aktuators (3, 33) mit einem Motor (4, 34), wobei der Aktuator (3, 33) zum Vortreiben zumindest eines Austragskolbens (22) eines Kartuschensystems (2) vorgesehen ist und wobei der Motor (4, 34) in Abhängigkeit von dem Betrag der gemessenen Kraft und/oder des gemessenen Drehmoments gesteuert wird.

14. Verfahren nach Anspruch 13, **dadurch gekennzeichnet, dass**
das Verfahren mit einer Auspressvorrichtung (1, 31) nach einem der Ansprüche 1 bis 12 durchgeführt wird.

15. Verfahren nach Anspruch 13 oder 14, **dadurch gekennzeichnet, dass** der Aktuator (3, 33) zusätzlich mechanisch von der Bedieneinrichtung angetrieben wird, und/oder
die von dem Motor (4, 34) auf den Aktuator (3, 33) wirkende Kraft oder das von dem Motor (4, 34) auf den Aktuator (3, 33) wirkende Drehmoment in einem Bereich proportional zu der durch den Kraft-Sensor (15, 45) gemessenen Betrag der auf die Bedieneinrichtung wirkenden Kraft eingestellt wird, wobei bevorzugt eine Proportionalitätskontante eingestellt wird.

## Claims

1. A squeeze-out device (1, 31) for driving out a highly viscous dental material, in particular a dental impression compound, from a cartridge system (2), the squeeze-out device (1, 31) having an actuator (3, 33), a motor (4, 34), a controller (14, 50), an operating device and at least one force sensor (15, 45), wherein at least one discharging plunger (22) of the cartridge system (2) is drivable by the actuator (3, 33), wherein the actuator (3, 33) is drivable by the motor (4, 34) or mechanically transmitted driving of the actuator (3, 33) is supportable by the motor (4, 34), wherein the operating device is manually operable, wherein the at least one force sensor (15, 45) is connected to the operating device such that at least the magnitude of a force acting on the operating device and/or at least the magnitude of a torque acting on the operating device is measurable, and wherein the motor (4, 34) is controllable by the controller (14, 50) depending on the measured magnitude of the force acting on the operating device and/or of the torque acting on the operating device, said magnitude being measured by the at least one force sensor (15, 45).

2. The squeeze-out device (1, 31) according to Claim 1, **characterized in that** the squeeze-out device (1, 31) is a cartridge gun.

3. The squeeze-out device (1, 31) according to Claim 1 or 2, **characterized in that** the operating device is a trigger, a lever (39) or a button (19), the squeeze-out device (1, 31) preferably being operable by means of the trigger, the lever (39) or the button (19) using the same hand with which the squeeze-out device (1, 31) is holdable single-handedly.

4. The squeeze-out device (1, 31) according to any of the preceding Claims, **characterized in that**
the squeeze-out device (1, 31) has an energy store (7, 37), the energy for driving the motor (4, 34) being extractable from the energy store (7, 37), the energy store (7, 37) preferably being a battery store, a rechargeable battery or a compressed-gas reservoir.

5. The squeeze-out device (1, 31) according to any of the preceding Claims, **characterized in that**
the at least one force sensor (15, 45) is suitable or provided for measuring the magnitude of at least one linear force and/or of at least one torque.

6. The squeeze-out device (1, 31) according to any of the preceding Claims, **characterized in that**
the controller (14, 50) controls the motor (4, 34) such that the force acting on the actuator (3, 33) from the motor (4, 34) or the torque acting on the actuator (3, 33) from the motor (4, 34) is, in a force range or a torque range, proportional to the magnitude of the force acting on the operating device or of the torque acting on the operating device, said magnitude having been measured by the force sensor (15, 45).

7. The squeeze-out device (1, 31) according to Claim 6, **characterized in that** the proportionality is adjustable, preferably manually adjustable by an operating element.

8. The squeeze-out device (1, 31) according to any of the preceding Claims, **characterized in that**
in addition to the magnitude of the force acting on the operating device and/or of the torque acting on the operating device, the direction of the force and/or the torque is also measurable by the force sensor (15, 45), the direction of the force and/or of the torque preferably being usable to control (14, 50) the motor (4, 34) by means of the controller (14, 50).

9. The squeeze-out device (1, 31) according to any of the preceding Claims, **characterized in that**
at least one plate (10, 40) is attached to a front side of the actuator (3, 33), the at least one discharging plunger (22) of the cartridge system being operable by said plate.

10. The squeeze-out device (1, 31) according to any of the preceding Claims, **characterized in that**
the dependency of a power or force of the motor (4, 34) acting on the actuator (3, 33) on the magnitude of the force acting on the operating device and/or of the torque acting on the operating device, said magnitude having been measured by the force sensor (15, 45), is adjustable.

11. The squeeze-out device (1, 31) according to any of the preceding Claims, **characterized in that**
the operating device is connected to the actuator (33) such that a force acting on the operating device and/or a torque acting on the operating device is transmittable to the actuator (33) for driving the at least one discharging plunger (22) of the cartridge system (2), the force and/or the torque preferably being mechanically transmittable, particularly preferably transmittable by a lever (39) and/or a gearing (54).

12. The squeeze-out device (1, 31) according to any of the preceding Claims, **characterized in that**
the squeeze-out device (1, 31) is suitable for squeezing out cartridge systems (2) for dental impression compounds, in particular two-component cartridges for dental impression compounds, and for this purpose has an attachment element (18, 48), which is attachable to the cartridge system (2), the cartridge system (2) preferably providing a volume of between 5 ml and 100 ml of the dental impression compound, particularly preferably a volume of between 25 ml and 100 ml of the dental impression compound, very particularly preferably a volume of 50 ml, and/or
the squeeze-out device (1, 31) is suitable for squeezing out cartridge systems (2) for dental impression compounds of type 1 or type 0 according to DIN ISO 4823:2015.

13. A method for driving at least one discharging plunger (22) of a cartridge system (2) by means of a squeeze-out device (1, 31), **characterized by** the steps of operating an operating device by means of a force acting on the operating device, measuring, by means of at least one force sensor (15, 45), the magnitude of a force acting on the operating device and/or of a torque acting on the operating device, driving an actuator (3, 33) by means of a motor (4, 34), wherein the actuator (3, 33) is provided for propelling at least one discharging plunger (22) of a cartridge system (2), and wherein the motor (4, 34) is controlled depending on the magnitude of the measured force and/or of the measured torque.

14. The method according to Claim 13, **characterized in that**
the method is carried out by means of a squeeze-out device (1, 31) according to any of Claims 1 to 12.

15. The method according to Claim 13 or 14, **characterized in that** the actuator (3, 33) is additionally driven mechanically by the operating device, and/or the force acting on the actuator (3, 33) from the motor (4, 34) or the torque acting on the actuator (3, 33) from the motor (4, 34) is, in a range, adjusted proportionally to the magnitude of the force acting on the operating device, said magnitude being measured by the force sensor (15, 45), wherein preferably a proportionality constant being adjusted.

## Revendications

1. Dispositif d'extrusion (1, 31) permettant d'expulser un matériau dentaire hautement visqueux, notamment un matériau de moulage dentaire, à partir d'un système de cartouche (2), le dispositif d'extrusion (1, 31) présentant un actionneur (3, 33), un moteur (4, 34), une commande (14, 50), un dispositif de commande et au moins un capteur de force (15, 45), où au moins un piston d'évacuation (22) du système de cartouche (2) peut être activé avec l'actionneur (3, 33), où l'actionneur (3, 33) peut être activé avec le moteur (3, 33) ou un entraînement mécanique transmis de l'actionneur (3, 33) peut être assisté avec le moteur (4, 34), où le dispositif de commande est actionnable manuellement, où l'au moins un capteur de force (15, 45) est relié avec le dispositif de commande de telle manière qu'au moins la contribution d'une force agissant sur le dispositif de commande, et/ou au moins la contribution d'un couple de rotation agissant sur le dispositif de commande, peut être mesurée, et où le moteur (4, 34), avec la commande (14, 50), peut être activé en fonction de la contribution mesurée par l'au moins un capteur de force (15, 45) de la force agissant sur le dispositif de commande, et/ou du couple de rotation agissant sur le dispositif de commande.

2. Dispositif d'extrusion (1, 31) selon la revendication 1, **caractérisé en ce que** le dispositif d'extrusion (1, 31) est un pistolet à cartouche.

3. Dispositif d'extrusion (1, 31) selon la revendication 1 ou la revendication 2, **caractérisé en ce que**
le dispositif de commande est une gâchette, un levier (39) ou un bouton-poussoir (19), où, de préférence, le dispositif d'extrusion (1, 31) peut être actionné par le biais de la gâchette, du levier (39) ou du bouton-poussoir (19) avec la même main avec laquelle le dispositif d'extrusion (1, 31) est tenu d'une seule main.

4. Dispositif d'extrusion (1, 31) selon l'une des revendications précédentes, **caractérisé en ce que**
le dispositif d'extrusion (1, 31) présente un accumulateur d'énergie (7, 37), où l'énergie peut être prélevée pour la mise en marche du moteur (4, 34) à partir de l'accumulateur d'énergie (7, 37), où, de préférence, l'accumulateur d'énergie (7, 37) est un accumulateur de batterie, un accumulateur ou un réservoir de gaz sous pression.

5. Dispositif d'extrusion (1, 31) selon l'une des revendications précédentes, **caractérisé en ce que**
l'au moins un capteur de force (15, 45) est approprié ou prévu pour la mesure de la contribution d'au moins une force linéaire et/ou d'au moins un couple de rotation.

6. Dispositif d'extrusion (1, 31) selon l'une des revendications précédentes, **caractérisé en ce que**
la commande (14, 50) commande le moteur (4, 34) de telle manière que la force agissant sur l'actionneur (3, 33) par le moteur (4, 34), ou le couple de rotation agissant sur l'actionneur (3, 33) par le moteur (4, 34), est proportionnel(le) à la contribution de la force agissant sur le dispositif de commande ou du couple de rotation agissant sur le dispositif de commande, mesurée par le capteur de force (15, 45).

7. Dispositif d'extrusion (1, 31) selon la revendication 6, **caractérisé en ce que** la proportionnalité est réglable, de préférence, est réglable manuellement avec un élément de commande.

8. Dispositif d'extrusion (1, 31) selon l'une des revendications précédentes, **caractérisé en ce**
**qu'**avec le capteur de force (15, 45), outre la contribution de la force agissant sur le dispositif de commande et/ou du couple de rotation agissant sur le dispositif de commande, on peut également mesurer la direction de la force et/ou du couple de rotation, où, de préférence, la direction de la force, et/ou du couple de rotation, peut être employée pour la commande (14, 50) du moteur (4, 34) avec la commande (14, 50).

9. Dispositif d'extrusion (1, 31) selon l'une des revendications précédentes, **caractérisé en ce**
**qu'**au moins une assiette (10, 40) est fixée sur le côté avant de l'actionneur (3, 33) avec laquelle l'au moins un piston d'évacuation (22) du système de cartouche peut être actionné.

10. Dispositif d'extrusion (1, 31) selon l'une des revendications précédentes, **caractérisé en ce que**
la dépendance d'une puissance ou d'une force du moteur (4, 34) agissant sur l'actionneur (3, 33) est réglable par la contribution mesurée par le capteur de force (15, 45) de la force agissant sur le dispositif de commande et/ou du couple de rotation agissant sur le dispositif de commande.

11. Dispositif d'extrusion (1, 31) selon l'une des revendications précédentes, **caractérisé en ce que**
le dispositif de commande est relié avec l'actionneur (33) de telle manière qu'une force agissant sur le dispositif de commande, et/ou un couple de rotation agissant sur le dispositif de commande, est transmissible à l'actionneur (33) pour l'entraînement de l'au moins un piston d'évacuation (22) du système de cartouche (2), où, de préférence, la force, et/ou le couple de rotation, est transmissible mécaniquement, de manière particulièrement préférée, par le biais d'un levier (39) et/ou d'une transmission (54).

12. Dispositif d'extrusion (1, 31) selon l'une des revendications précédentes, **caractérisé en ce que**
le dispositif d'extrusion (1, 31) est approprié pour l'expulsion de systèmes de cartouches (2) pour des matériaux de moulage dentaire, notamment est approprié pour des cartouches à deux composants prévus pour les matériaux de moulage dentaire, et de ce fait présente un élément de fixation (18, 48) qui peut être fixé sur le système de cartouche (2), où, de préférence, le système de cartouche (2) procure un volume entre 5 ml et 100 ml de matériau de moulage dentaire, de manière particulièrement préférée, procure un volume entre 25 ml et 100 ml de matériau de moulage dentaire, procure idéalement un volume de 50 ml, et/ou
le dispositif d'extrusion (1, 31) est approprié pour l'expulsion de systèmes de cartouches (2) pour des matériaux de moulage dentaire de type 1 ou de type 0 selon la norme DIN ISO 4823 : 2015.

13. Procédé d'entraînement d'au moins un piston d'évacuation (22) d'un système de cartouches (2) avec un dispositif d'extrusion (1, 31), **caractérisé par** les étapes d'utilisation d'un dispositif de commande avec une force agissant sur le dispositif de commande,
de mesure de la contribution de la force agissant sur le dispositif de commande et/ou d'un couple de rotation agissant sur le dispositif de commande avec au moins un capteur de force (15, 45),
d'entraînement d'un actionneur (3, 33) avec un moteur (4, 34), où l'actionneur (3, 33) est prévu pour l'avancée d'au moins un piston d'évacuation (22) d'un système de cartouche (2), et où le moteur (4, 34) est commandé en fonction de la contribution de la force mesurée et/ou du couple de rotation mesuré.

14. Procédé selon la revendication 13, **caractérisé en ce que**
le procédé est exécuté avec un dispositif d'extrusion (1, 31) selon l'une des revendications 1 à 12.

15. Procédé selon la revendication 13 ou la revendication 14, **caractérisé en ce que** l'actionneur (3, 33) est entraîné par ailleurs mécaniquement par le dispositif de commande, et/ou
la force agissant par le moteur (4, 34) sur l'actionneur (3, 33), ou le couple de rotation agissant par le moteur (4, 34) sur l'actionneur (3, 33), est réglé(e) dans une plage proportionnelle à la contribution de la force agissant sur le dispositif de commande mesurée par le capteur de force (15, 45), où, de préférence, on règle une constante de proportionnalité.
